# EUROPÄISCHE PATENTSCHRIFT

(11) **EP 2 822 759 B1**
(45) Veröffentlichungstag und Bekanntmachung des Hinweises auf die Patenterteilung: **04.05.2016**
(21) Anmeldenummer: 13706969.6
(22) Anmeldetag: 26.02.2013
(51) Int. Cl.: B32B 15/08

(54) **LEICHTBLECH UND EINE LEICHTBLECH UMFASSENDE KONSTRUKTION**
LIGHTWEIGHT PLATE, AND CONSTRUCTION COMPRISING A LIGHTWEIGHT PLATE
TÔLE LÉGÈRE ET CONSTRUCTION COMPRENANT UNE TÔLE LÉGÈRE

(30) Priorität: 07.03.2012 DE 102012101913
(43) Veröffentlichungstag der Anmeldung: 14.01.2015
(73) Patentinhaber: ThyssenKrupp Steel Europe AG, 47166 Duisburg (DE)
(72) Erfinder: SIEG, Hans-Joachim, 38108 Braunschweig (DE); SÜNKEL, Ralf, 40883 Ratingen (DE)
(74) Vertreter: Cohausz & Florack
(86) Internationale Anmeldenummer: PCT/EP2013/053758
(87) Internationale Veröffentlichungsnummer: WO 2013/131775

(56) Entgegenhaltungen:
- EP-A1- 1 072 349
- DE-A1-102010 061 502
- DE-A1-102011 052 110

## Beschreibung

Die Erfindung betrifft ein Leichtblech, insbesondere zur Verwendung im Fahrzeugbau, mit mindestens zwei metallischen Deckblechen und mindestens einer nichtmetallischen Kernschicht, welche vorzugsweise aus Kunststoff gebildet ist, und mindestens einem Durchgangsloch zur Aufnahme eines Verbindungselements, insbesondere einer Schraube oder eines Niets. Ferner betrifft die Erfindung eine Konstruktion umfassend mindestens ein solches Leichtblech und mindestens ein weiteres, vorzugsweise metallisches Bauteil, das mit dem mindestens einen Leichtblech über ein in dem Durchgangsloch aufgenommenes Verbindungselement kraft- und/oder formschlüssig verbunden ist.

Leichtbleche, welche zwei metallische Deckschichten und eine dazwischen liegende, nicht metallische, in der Regel elektrisch isolierende Kernschicht aufweisen, werden zunehmend im Automobilbau eingesetzt. Leichtbleche, auch Sandwichbleche oder Verbundbleche genannt, versprechen neben einer Gewichtsreduktion auch zusätzliche Vorteile im Hinblick auf Schwingungsdämpfung und Steifigkeit. Die üblicherweise aus Kunststoff bestehende Kernschicht des Sandwichblechs ist elektrisch isolierend, so dass beispielsweise ein Widerstandsschweißen der Leichtbleche gar nicht oder nur mit erheblichem, technischem Aufwand erfolgen kann.

Aus der japanischen Offenlegungsschrift JP 57-127 581 A ist ein Verfahren zur Verbindung eines eine Kernschicht aus thermoplastischem Harz aufweisenden metallischen Verbundbleches bekannt, bei dem zur Verbesserung der Steifigkeit des Verbundbleches metallische Vollzylinder, die in ausgestanzte Durchgangslöcher des Verbundbleches eingesetzt werden, mit den metallischen Deckschichten des Verbundbleches verschweißt werden. An den Vollzylindern lassen sich weitere Bauteile, beispielsweise durch Schweißen, mit dem Verbundblech verbinden. Allerdings kann der jeweilige Vollzylinder nur Querkräfte innerhalb des Verbundbleches aufnehmen. Senkrecht zu der Verbundblechebene wirkende Kräfte sind jedoch bei der Verwendung solcher Vollzylinder problematisch.

Ferner ist aus der Übersetzung einer europäischen Patentschrift DE 600 03 497 T2 bekannt, Schrauben oder Bolzen in ein Verbundblech (Leichtblech) einzubringen und über eine Widerstandsschweißung fest mit dem Verbundblech zu verbinden. Dabei wird in einem Vorwärmprozess zunächst die Kernschicht im Bereich der Schraube bzw. des Bolzens im Verbundblech entfernt und anschließend eine normale Widerstandsschweißung durchgeführt.

Bei den aus der JP 57-127 581 A1 und der DE 600 03 497 T2 bekannten Verbundblechen ist die Dicke der Kernschicht relativ gering im Vergleich zur Dicke der jeweiligen Deckschicht. Problematisch wird der Einsatz eines Bolzens oder einer Schraube, wie bei dem Verbundblech gemäß der DE 600 03 497 T2 vorgesehen, dann, wenn die Kernschicht eine größere Dicke im Vergleich zu den Deckschichten aufweist. In diesem Fall muss nämlich auch die Kernschicht Querkräfte aufnehmen können, ohne dass sich die Verbindung zwischen Verbundblech und dem damit verbundenen Bauteil löst.

Die DE 88 12 828 U1 offenbart eine Sandwichplatte aus zwei im Abstand zueinander angeordneten, durch eine Kunststoffschicht miteinander verbundenen Metallblechen, die ihre Fläche durchdringende Löcher aufweisen. Im Bereich der Löcher und im Bereich des Randes wenigstens eines der Metallbleche ist ein nach innen rückspringender Absatz ausgebildet. Der Absatz im Bereich des jeweiligen Lochs stellt eine nach innen in die Kunststoffschicht eingedrückte, das Loch umgebende Vertiefung in dem Metallblech zur Aufnahme eines Schraubenkopfes, einer Kragenbuche oder dergleichen dar. Die Metallbleche weisen dabei unterschiedlich große, ein Durchgangsloch definierende Löcher auf, wobei die Kunststoffschicht ein mit den Löchern der Metallbleche fluchtendes Loch aufweist.

Der vorliegenden Erfindung liegt die Aufgabe zugrunde, ein Leichtblech der eingangs genannten Art bereitzustellen, das auch bei relativ dicker Kernschicht Querkräfte an dem jeweiligen Durchgangsloch aufnehmen kann, ohne dass sich die Verbindung zwischen Leichtblech und einem damit verbundenen Bauteil löst, und ohne dass hierzu ein Zusatzteil, wie beispielsweise ein metallischer Vollzylinder, in das Durchgangsloch eingesetzt und mit mindestens einem der Deckbleche verschweißt werden muss. Insbesondere liegt der Erfindung die Aufgabe zugrunde, eine Konstruktion umfassend mindestens ein gattungsgemäßes Leichtblech und mindestens ein weiteres, vorzugsweise metallisches Bauteil anzugeben, welche Querkräfte an dem jeweiligen Durchgangsloch aufnehmen kann, ohne dass sich die Verbindung zwischen Leichtblech und einem damit verbundenen Bauteil löst, und ohne dass hierzu ein Zusatzteil, wie beispielsweise ein metallischer Vollzylinder, in das Durchgangsloch eingesetzt und mit mindestens einem der Deckbleche verschweißt werden muss.

Zur Lösung dieser Aufgabe wird ein Leichtblech mit den Merkmalen des Anspruchs 1 vorgeschlagen.

Weitere bevorzugte und vorteilhafte Ausgestaltungen der Erfindung sind in den Unteransprüchen angegeben.

Die erfindungsgemäße Lösung sieht vor, dass die Deckbleche des Leichtblechs unterschiedlich große, das Durchgangsloch definierende Löcher aufweisen, wobei die Kernschicht ein mit den Löchern der Deckbleche fluchtendes Loch aufweist, dessen Lochdurchmesser im Wesentlichen dem Durchmesser des größeren Loches der unterschiedlich großen Löcher der Deckbleche entspricht.

Die Erfindung basiert auf der Idee, aus einem der Deckbleche durch Umformen des Lochrandes in Richtung der Kernschicht einen Kragen zu erzeugen, der die Kernschicht vollständig oder zumindest soweit abdeckt, dass das Leichtblech im Bereich der Kernschicht auftretende Querkräfte aufnehmen kann, ohne dass hierzu zusätzliche Teile mit einem der Deckbleche verschweißt werden müssen.

Der Kragen kann im Zuge der Herstellung des Durchgangsloches durch Umformen des Lochrandes erzeugt werden, so dass das lieferfertige Leichtblech den Kragen bereits aufweist. Es liegt jedoch auch im Rahmen der Erfindung, dass der Lochrand des den kleineren Lochdurchmesser aufweisenden Loches des einen Deckbleches bei einem erfindungsgemäßen, lieferfertigen Leichtblech noch nicht in Richtung der Kernschicht umgeformt (umgebogen) ist, und dass der Kragen in diesem Fall erst beim oder vorzugsweise unmittelbar durch Einstecken eines geeigneten Verbindungselements, beispielsweise einer Schraube oder eines Nietes, in das Durchgangsloch erzeugt wird.

Durch den Wegfall von zusätzlichen Teilen, wie zum Beispiel metallischen Vollzylindern, und den Wegfall der Schweißarbeit zur Verbindung von zum Beispiel Schrauben oder Bolzen bzw. zusätzlichen Teilen mit dem Leichtblech (Verbundblech), lässt sich ein gattungsgemäßes Leichtblech kostengünstiger herstellen als beispielsweise die aus den Druckschriften JP 57-127 581 A und DE 600 03 497 T2 bekannten Verbundbleche bzw. Konstruktionen.

Gemäß einer ersten Ausführungsform des erfindungsgemäßen Leichtbleches ist das den kleineren Lochdurchmesser aufweisende Loch des einen Deckbleches so bemessen, dass ein durch Umformen des Lochrandes dieses Deckbleches in Richtung der Kernschicht erzeugbarer oder erzeugter Kragen die Kernschicht teilweise abdeckt, wobei der Kragen mindestens ein Drittel, vorzugsweise mindestens die Hälfte der Dicke der Kernschicht abdeckt. Diese erfindungsgemäße Ausführungsform kann beispielsweise in Fällen zur Anwendung kommen, bei denen das Leichtblech, insbesondere die Kernschicht relativ dick ist, während der Durchmesser des Durchgangsloches zur Aufnahme einer Schraube, eines Niets oder eines anderen Verbindungselements relativ klein sein soll. Auch in solchen Fällen kann das erfindungsgemäße Leichtblech durch seinen die Kernschicht teilweise abdeckenden Kragen Querkräfte in ausreichendem Maße aufnehmen, ohne dass hierzu zusätzliche Teile in das Durchgangsloch eingesteckt und mit dem Leichtblech verschweißt werden müssen.

Alternativ ist das erfindungsgemäße Leichtblech dadurch gekennzeichnet, dass die Lochdurchmesser der unterschiedlich großen Löcher der Deckbleche derart aufeinander abgestimmt sind, dass eine umlaufende Kante eines Kragens, der durch Umformen des Randes des den kleineren Lochdurchmesser aufweisenden Loches des einen Deckenbleches in Richtung der Kernschicht erzeugt wird oder ist, zumindest bereichsweise die umlaufende Kante des den größeren Lochdurchmesser aufweisenden Loches des anderen Deckenbleches berührt. Diese erfindungsgemäße Ausführungsform kann beispielsweise in Fällen zur Anwendung kommen, bei denen der Durchmesser des Durchgangsloches und der Durchmesser des Schaftes des im Durchgangsloch eingesetzten Verbindungselements unabhängig von der Dicke des Leichtbleches bemessen werden können. Vorzugsweise schließt der Kragen dabei im Wesentlichen bündig mit dem anderen Deckenblech bzw. der Außenseite des Leichtbleches ab. Hierdurch können grundsätzlich jeweils höhere Querkräfte aufgenommen werden als bei der zuvor genannten Ausgestaltung, bei welcher der einwärts eingeformte Kragen die Kernschicht nur teilweise abdeckt.

Die Deckbleche des erfindungsgemäßen Leichtbleches sind vorzugsweise aus Stahl gefertigt. Stahl zeichnet sich durch relativ günstige Materialkosten bei hoher Steifigkeit sowie einfacher Weiterverarbeitbarkeit, insbesondere guter Umformbarkeit aus. Denkbar ist aber auch die Verwendung von Aluminium oder einer Aluminiumlegierung bzw. Magnesium oder einer Magnesiumlegierung als Deckbleche.

Die Dicke der Kernschicht des erfindungsgemäßen Leichtbleches liegt vorzugsweise im Bereich von 0,2 mm bis 3,0 mm; und besonders bevorzugt im Bereich von 0,3 mm bis 1,0 mm.

Das jeweilige Deckblech des erfindungsgemäßen Leichtbleches besitzt vorzugsweise eine Dicke im Bereich von 0,1 mm bis 1,0 mm, besonders bevorzugt im Bereich von 0,15 mm bis 0,4 mm.

Die Kernschicht des erfindungsgemäßen Leichtbleches ist vorzugsweise mindestens so dick wie das einzelne Deckblech. In einer vorteilhaften Ausgestaltung des erfindungsgemäßen Leichtbleches ist die Dicke der Kernschicht größer als die Dicke des jeweiligen Deckbleches, wobei die Dicke der Kernschicht mindestens das 1,1-fache, vorzugsweise mindestens das 2-fache der Dicke des jeweiligen Deckbleches beträgt. Das erfindungsgemäße Leichtblech (Verbundblech) zeichnet sich in dieser Ausgestaltung durch ein relativ geringes Gewicht aus, wobei seine Steifigkeit gleichwohl im Bereich derjenigen von schwereren monolithischen Stahlblechen liegt.

Eine weitere vorteilhafte Ausgestaltung des erfindungsgemäßen Leichtbleches ist dadurch gekennzeichnet, dass die Deckbleche unterschiedliche Dicken und/oder Werkstoffgüten aufweisen. Hierdurch ergeben sich zusätzliche Optionen, durch die das erfindungsgemäße Leichtblech individuell auf die Anforderungen in der jeweiligen Verwendung ausgelegt werden kann.

Eine weitere vorteilhafte Ausgestaltung des erfindungsgemäßen Leichtbleches sieht vor, dass dessen Kernschicht aus einem bis mindestens 200 °C temperaturstabilen Kunststoff, vorzugsweise aus Polyethylen-Polyamid-Compound besteht. Hierdurch wird sichergestellt, dass das erfindungsgemäße Leichtblech in einer kathodischen Tauchlackieranlage problemlos beschichtet werden kann.

Eine weitere vorteilhafte Ausgestaltung des erfindungsgemäßen Leichtbleches sieht vor, dass das Deckblech, welches das kleinere Loch aufweist, an seiner der Kernschicht zugewandten Innenseite eine ringförmige, vorzugsweise kreisringförmige Ausnehmung bzw. Ringnut aufweist. Diese Ausnehmung oder Ringnut definiert eine Sollknickstelle für eine einwärts gerichtete Abkantung dieses Deckbleches.

Aufgrund der einfachen Anbindungsmöglichkeit eines Bauteils an das erfindungsgemäße Leichtblech ist dessen Verwendung im Fahrzeugbau besonders vorteilhaft, da neben einer Gewichtsersparnis auch weitere Eigenschaften, beispielsweise eine schalldämpfende Eigenschaft durch das Leichtblech erzielt werden kann. Die Einsatzmöglichkeit von Verbundblechen im Fahrzeugbau, insbesondere Kraftfahrzeugbau, wird durch das erfindungsgemäße Leichtblech deutlich verbessert. Aus dem erfindungsgemäßen Leichtblech (Verbundblech) lässt sich eine Vielzahl von Automobil-Bauteilen fertigen, beispielsweise Stirnwände (Motorraumtrennwände), Fahrgastraumböden, Reserveradmulden, Dächer, Türen, Motorhauben und Heckklappen.

Nachfolgend wird die Erfindung anhand einer mehrere Ausführungsbeispiele darstellenden Zeichnung näher erläutert. Es zeigen schematisch:
- Fig. 1a bis 1g: verschiedene Schritte der Herstellung eines erfindungsgemäßen Leichtbleches mit einem Durchgangsloch gemäß einem ersten Ausführungsbeispiel;
- Fig. 2: einen Abschnitt eines erfindungsgemäßen Leichtbleches mit einem Durchgangsloch gemäß dem ersten Ausführungsbeispiel, in Schnittansicht;
- Fig. 3: den Abschnitt des Leichtbleches der Fig. 2 mit einem daran mittels einer Schraubverbindung angebundenen Bauteil, in Schnittansicht;
- Fig. 4a bis 4f: verschiedene Schritte der Herstellung eines erfindungsgemäßen Leichtbleches mit einem Durchgangsloch gemäß einem zweiten Ausführungsbeispiel;
- Fig. 5: einen Abschnitt eines erfindungsgemäßen Leichtbleches mit einem Durchgangsloch gemäß dem zweiten Ausführungsbeispiel, in Schnittansicht;
- Fig. 6: den Abschnitt des Leichtbleches der Fig. 5 mit einem daran mittels einer Schraubverbindung angebundenen Bauteil, in Schnittansicht;
- Fig. 7: einen Abschnitt eines erfindungsgemäßen Leichtbleches mit einem Durchgangsloch gemäß einem dritten Ausführungsbeispiel, in Schnittansicht;
- Fig. 8a bis 8c: verschiedene Schritte der Anbindung eines Bauteils an ein erfindungsgemäßes Leichtblech der Fig. 7; und
- Fig. 9a bis 9d: verschiedene Schritte der Herstellung eines erfindungsgemäßen Leichtbleches mit einem Durchgangsloch gemäß einem weiteren Ausführungsbeispiel.

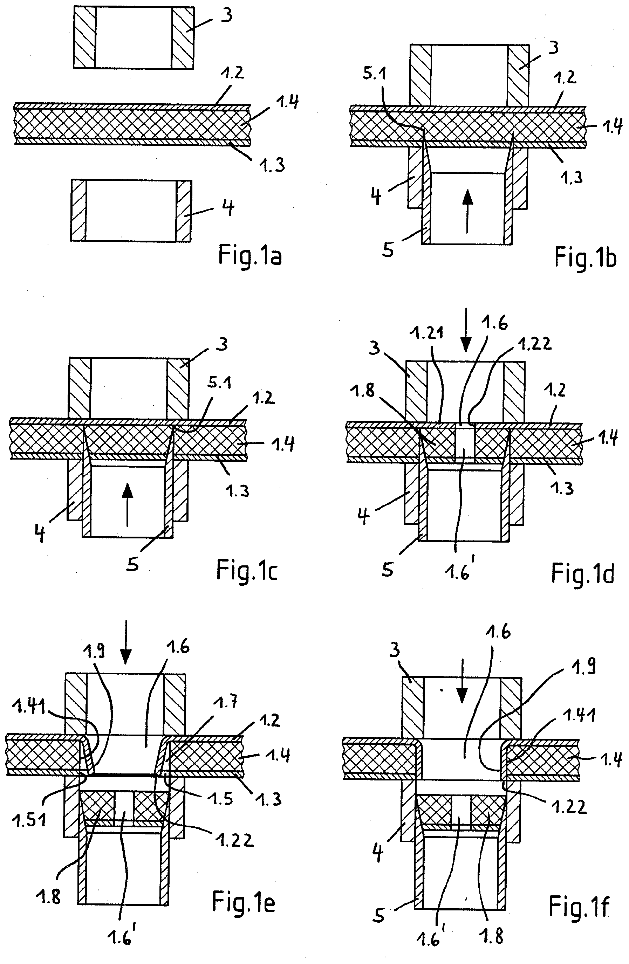

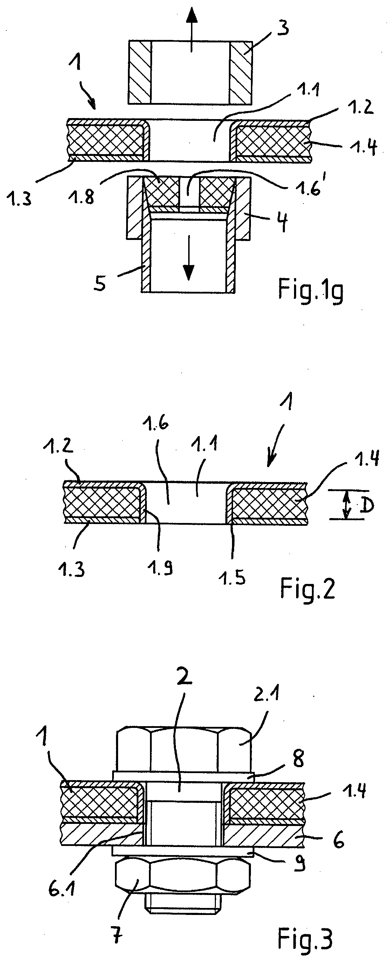

In den Figuren 1a bis 1g sind verschiedene Schritte der Herstellung eines erfindungsgemäßen Leichtbleches 1 mit mindestens einem Durchgangsloch 1.1 gemäß einem ersten Ausführungsbeispiel schematisch dargestellt. Das Durchgangsloch 1.1 dient der Aufnahme eines Verbindungselements, beispielsweise eines Schraubbolzens 2 oder Niets (vgl. Fig. 2 und 3).

Das erfindungsgemäße Leichtblech 1, 1', 1", das auch als Sandwichblech oder Verbundblech bezeichnet werden kann, umfasst zwei metallische Deckbleche 1.2, 1.3 und eine dazwischen angeordnete nichtmetallische Kernschicht 1.4, die vorzugsweise aus Kunststoff gebildet ist. Die Deckbleche 1.2, 1.3 bestehen vorzugsweise aus Stahl.

Zur Herstellung des Durchgangsloches 1.1 werden die Deckbleche 1.2, 1.3 und die Kernschicht 1.4 gelocht. Erfindungsgemäß werden dabei in die Deckbleche 1.2, 1.3 unterschiedlich große, das Durchgangsloch 1.1 definierende Löcher 1.5, 1.6 eingebracht. Das mit den Löchern 1.5, 1.6 der Deckbleche 1.2, 1.3 fluchtende Loch 1.7 der Kernschicht 1.4 weist einen Durchmesser auf, der im Wesentlichen dem Durchmesser des größeren Lochs 1.5 der beiden unterschiedlich großen Löcher 1.5, 1.6 der Deckbleche 1.2, 1.3 entspricht (vgl. Fig. 1e).

Zur Herstellung der Löcher 1.5, 1.6, 1.7 wird das Leichtblech im Bereich des zu erzeugenden Durchgangsloches 1.1 eingespannt. Hierzu können beispielsweise ringförmige Spannmittel 3, 4 verwendet werden. Vorzugsweise besitzen die ringförmigen Spannmittel 3, 4 unterschiedliche Innendurchmesser (vgl. Fig. 1a und 1b).

Beispielsweise wird zunächst das größere Loch 1.5 in einem der beiden Deckbleche 1.2, 1.3 hergestellt bzw. in das Deckblech eingeschnitten. Hierzu wird ein Werkzeug 5, vorzugsweise ein Lochstanzwerkzeug verwendet, das durch das an dem betreffenden Deckblech 1.3 angedrückte Spannmittel 4 hindurch bewegt werden kann.

Vorzugsweise wird mit diesem Werkzeug 5 auch die Kernschicht 1.4 gelocht bzw. durchschnitten. Das Lochstanzwerkzeug 5 wird hierzu unmittelbar nach Durchdringen des (unteren) Deckbleches 1.3 weiter in Richtung des zweiten Deckbleches 1.2 bewegt (vgl. Fig. 1b). Die Bewegung des Lochstanzwerkzeuges 5 wird gestoppt, wenn dessen Schneidspitze 5.1 das zweite bzw. obere Deckblech 1.2 erreicht oder geringfügig in dieses eindringt (vgl. Fig. 1c und Fig. 1d).

Anschließend wird das kleinere Loch 1.6 in das zweite bzw. obere Deckblech 1.2 eingebracht bzw. eingeschnitten. Dabei werden vorzugsweise auch die Kernschicht 1.4 und das erste bzw. untere Deckblech 1.3 gelocht, so dass das kleinere Loch 1.6 als Durchgangsloch 1.6' an dem ersten bzw. unteren Deckblech 1.3 mündet (vgl. Fig. 1d).

Das kleinere Loch 1.6' in der Kernschicht 1.4 und im ersten oder unteren Deckblech 1.3 erleichtert das Entfernen des zur Herstellung des größeren Loches 1.5, 1.7 ausgeschnittenen Abschnittes 1.8 des Leichtbleches.

Zur Herstellung des kleineren Loches 1.6, 1.6' wird ebenfalls ein Werkzeug (nicht gezeigt), vorzugsweise ein Lochstanzwerkzeug verwendet. Dieses (nicht gezeigte) Werkzeug für das kleinere Loch 1.6, 1.6' wird vorzugsweise durch das an dem zweiten bzw. oberen Deckblech 1.2 angedrückte Spannmittel 3 hindurch bewegt.

Nachdem die beiden unterschiedlich großen Löcher 1.5, 1.7 und 1.6 in das Leichtblech eingebracht bzw. eingeschnitten sind, wird das zur Herstellung des größeren Loches 1.5, 1.7 verwendete Werkzeug 5 zurückbewegt und der mit diesem Werkzeug ausgeschnittene Abschnitt 1.8 des Leichtblechs entfernt. Anschließend wird der das kleinere Loch 1.6 umgebende Rand 1.21 des zweiten bzw. oberen Deckbleches 1.2 einwärts, d.h. in Richtung der Kernschicht 1.4 umgelegt (gebogen). Hierdurch wird das kleinere Loch 1.6 geweitet bzw. ein Kragen 1.9 erzeugt (vgl. Fig. 1e). Das hierzu verwendete Werkzeug, beispielsweise ein Stößel, ist in der Zeichnung nicht dargestellt. Vorzugsweise wird das kleinere Loch 1.6 bzw. der Kragen 1.9 zwei- oder mehrfach geweitet, so dass der Kragen 1.9 schließlich an der zylindrischen Schnittfläche 1.41 der Kernschicht 1.4 anliegt (vgl. Fig. 1e und 1f).

Das Leichtblech 1 bleibt vorzugsweise während der Herstellung der unterschiedlich großen Löcher 1.5, 1.6, 1.7 bis zur abschließenden Weitung des kleineren Loches.1.6 bzw. vollständigen Umlegung des Kragens 1.9 (siehe Fig. 1f) zwischen den Spannmittel 3, 4 eingespannt.

Nach Fertigstellung des Kragenloches 1.1 werden die Spannmittel von dem Leichtblech 1 entfernt (vgl. Fig. 1g).

In Fig. 2 ist ein Abschnitt eines erfindungsgemäßen Leichtbleches 1 mit einem als Kragenloch ausgeführten Durchgangsloch 1.1 in Querschnittansicht dargestellt, dessen Kragen 1.9 mittels eines Werkzeuges geformt (umgelegt) wurde. Die Herstellung des Durchgangslochs (Kragenloches) 1.1 gemäß Fig. 2 kann beispielsweise durch Ausführen der in den Figuren 1a bis 1g dargestellten Verfahrensschritte erfolgen. Es liegt auch im Rahmen der Erfindung, die in den Figuren 1a bis 1g dargestellten Verfahrensschritte in eine Werkzeugoperation einzubinden.

In Fig. 3 ist ein Abschnitt eines Leichtbleches 1 gemäß Fig. 2 mit einem daran mittels einer Schraube angebundenen Bauteil 6 dargestellt. Das Bauteil 6 weist hierzu ein Durchgangsloch 6.1 auf. Die Schraube besteht aus einem Schraubbolzen 2, auf den eine Mutter 7 aufgeschraubt ist. Zwischen dem Schraubenkopf 2.1 und Mutter 7 können am Leichtblech 1 bzw. am Bauteil 6 anliegende Unterlegscheiben 8, 9 angeordnet sein. Alternativ kann das Bauteil 6 auch eine Gewindebohrung (nicht gezeigt) aufweisen, in die ein in das Kragenloch 1.1 des Leichtbleches 1 eingesteckter Schraubbolzen 2 eingeschraubt wird. Ferner kann mit dem erfindungsgemäßen Leichtblech 1 auch beispielweise eine Nietverbindung realisiert werden, um ein Bauteil 6 an dem Leichtblech 1 anzubinden. Anstelle eines Schraubenschaftes wird dann ein Nietschaft in dem Kragenloch 1.1 aufgenommen.

Bei den in den Figuren 1a bis 1g und in den Figuren 2 und 3 dargestellten Ausführungsbeispielen sind die Durchmesser der unterschiedlich großen Löcher 1.5, 1.6 der Deckbleche 1.2, 1.3 derart aufeinander abgestimmt sind, dass die umlaufende Kante 1.22 des Kragens 1.9, der durch Umformen des Randes 1.21 des kleineren Deckblechloches 1.6 in Richtung der Kernschicht 1.4 erzeugt wird, zumindest bereichsweise die umlaufende Kante 1.51 des größeren Deckblechloches 1.5 berührt. Vorzugsweise schließt der Kragen 1.9 im Wesentlichen bündig mit der Außenfläche des Deckbleches 1.3 bzw. Leichtbleches 1 ab.

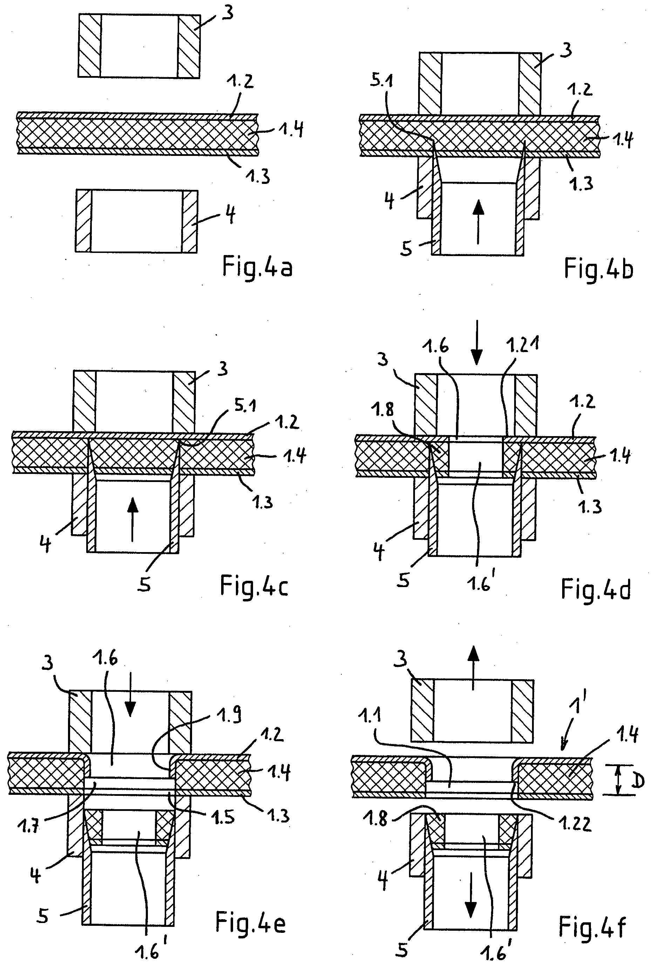

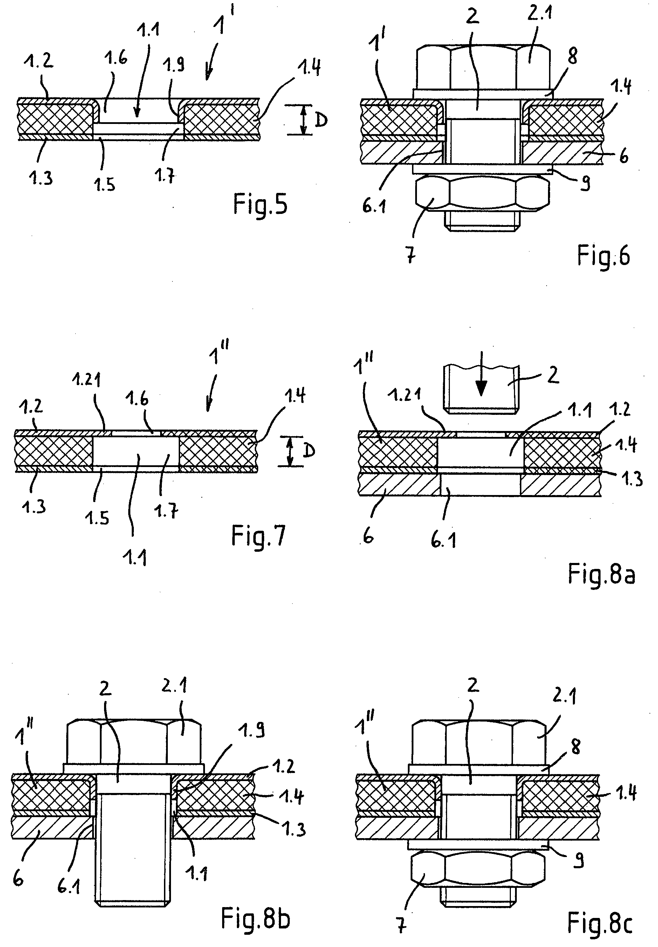

Die Figuren 4a bis 4f zeigen verschiedene Schritte der Herstellung eines erfindungsgemäßen Leichtbleches 1' mit mindestens einem Durchgangsloch 1.1 gemäß einem zweiten Ausführungsbeispiel, Ein Abschnitt eines solchen Leichtbleches 1' mit einem so hergestellten Durchgangsloch 1.1 ist in Fig. 5 gezeigt. In Fig. 6 ist ein Abschnitt eines Leichtbleches 1' gemäß Fig. 5 mit einem mittels einer Schraube 2 angebundenen Bauteil 6 dargestellt.

Das in den Figuren 4a bis 4f bzw. Fig. 5 dargestellte Ausführungsbeispiel unterscheidet sich von dem in den Figuren 1a bis 1g bzw. Fig. 2 dargestellten Ausführungsbeispiel dadurch, dass das den kleineren Durchmesser aufweisende Loch 1.6 des Deckbleches 1.2 derart bemessen ist, dass der durch Umformen des Lochrandes 1.21 dieses Deckbleches 1.2 in Richtung der Kernschicht 1.4 erzeugte Kragen 1.9 die Kernschicht 1.4 nur teilweise abdeckt. In dem in Fig. 5 gezeigten Beispiel erstreckt sich der Kragen 1.9 über mehr als die Hälfte der Kernschichtdicke D.

Die Herstellung der unterschiedlich großen Löcher 1.5, 1.6, 1.7 in den Deckschichten 1.2, 1.3 und der Kernschicht 1.4 des Leichtbleches 1' sowie das Umformen des Lochrandes 1.21 des kleineren Deckblechloches 1.6, erfolgen bei der in den Figuren 4a bis 4f dargestellten Variante im Wesentlichen wie bei dem Ausführungsbeispiel gemäß den Figuren 1a bis 1g, so dass zur Vermeidung von Wiederholungen hinsichtlich der Figuren 4a bis 4f auf die obige Beschreibung der Figuren 1a bis 1g verwiesen wird. Bei beiden Varianten wird der jeweilige Lochrand 1.21 des kleineren Deckblechloches 1.6 mittels eines Werkzeuges, beispielsweise eines Stößels zu einem einwärts in Richtung Kernschicht 1.4 gerichteten Kragen 1.9 umgeformt.

Ebenfalls wird zur Vermeidung von Wiederholungen hinsichtlich der Fig. 6 auf die obigen Ausführungen bezüglich der Fig. 3 verwiesen. Gleiche Teile sind mit denselben Bezugszeichen versehen.

Die Figuren 7 und 8a bis 8c zeigen eine weitere Variante des erfindungsgemäßen Leichtbleches 1". Bei dieser Variante wird der Lochrand 1.21 des kleineren Deckblechloches 1.6 während der Herstellung des Durchgangslochs 1.1 nicht umgeformt. Der Kragen 1.9 am kleineren Deckblechloch 1.6 wird bei dieser Variante erst während des Verbindens eines Bauteils 6 an dem Leichtblech 1" erzeugt, indem zum Beispiel der Schaft einer Schraube 2 oder eines Niets zur Anbindung des Bauteils 6 gegen den Rand 1.21 des kleineren Deckblechloches 1.6 und mit dem Lochrand 1.21 in das Durchgangsloch 1.1 des Leichtblechs 1" gedrückt wird (vgl. Fig. 8a und 8b).

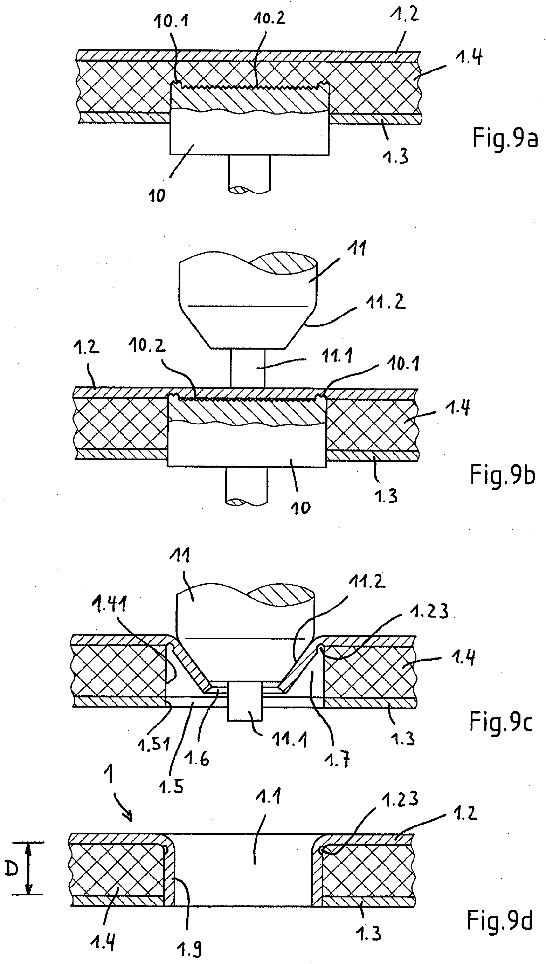

Bei dem in den Figuren 9a bis 9d dargestellten Ausführungsbeispiel wird das mindestens eine Durchgangsloch 1.1 des erfindungsgemäßen Leichtbleches 1 unter Verwendung eines Fräswerkzeuges hergestellt. Das Fräswerkzeug weist einen Fräskopf 10 auf, der mittels eines Motors rotierend angetrieben wird. An seiner Oberseite weist der Fräskopf 10 eine leichte Erhöhung 10.1 auf, die an den Umfang des Fräskopfes 10 grenzt. Die spanabhebende Erhöhung 10.1 ist vorzugsweise im Wesentlichen ring- oder kranzförmig ausgebildet. Sie kann beispielsweise aus mehreren zahnförmigen, voneinander beabstandeten Schneidelementen bestehen. Der innerhalb der Schneidelemente bzw. Erhöhung 10.1 liegende Bereich 10.2 des Fräskopfes 10 weist ebenfalls eine spanabhebende Oberflächenstruktur (z.B. Schneidkanten) auf. Die Erhöhung 10.1 steht gegenüber dem oberen spanabhebenden Bereich 10.2 des Fräskopfes 10 um ca. 0,05 mm bis 0,10 mm vor.

Die Erhöhung 10.1 des Fräskopfes 10 dient der Herstellung einer geringtiefen ringförmigen Ausnehmung 1.23, die eine Sollknickstelle für die einwärts gerichtete Abkantung des oberen Deckbleches 1.2 definiert. Die Abkantung des oberen Deckbleches 1.2 erfolgt mittels eines Stößels 11, der vorzugsweise ein vorstehendes mittiges Stanzelement 11.1 aufweist. Mit dem Stanzelement 11.1 wird ein Loch 1.6 in das oberen Deckblech 1.2 eingebracht, bevor bei weiterer Bewegung bzw. Absenkung des Stößels 11 ein im Wesentlichen konischer, das Stanzelement 11.1 umgebender Bereich 11.2 des Stößels 11 den das Loch 1.6 umgebenden, sich bis zu der Ringnut 1.23 bzw. Sollknickstelle erstreckender Randbereich 1.21 des Deckbleches 1.2 einwärts umgebogen wird (vgl. Fig. 9c).

Bei dem Ausführungsbeispiel gemäß den Figuren 9a bis 9d wird mit dem Fräswerkzeug die Kernschicht 1.4 im Bereich des Durchgangslochs 1.1 vollständig entfernt.

Es liegt im Rahmen der Erfindung, das in den Figuren 9a bis 9c dargestellte Ausführungsbeispiel dahingehend zu variieren, dass nach Herstellung des (kleineren) Loches 1.6 im Deckblech 1.2 die Abkantung des das Loch umgebenden Randes 1.21 nicht mit dem Stößel 11 oder einem anderen Werkzeug durchgeführt wird, sondern entsprechend dem in den Figuren 7 bis 8c dargestellten Ausführungsbeispiel erst während des Verbindens eines Bauteils 6 an dem Leichtblech erzeugt wird, indem der Schaft einer Schraube 2 oder eines Niets zur Anbindung des Bauteils gegen den Rand 1.21 des kleineren Deckblechloches 1.6 und mit dem Lochrand 1.21 in das Durchgangsloch 1.1 des Leichtblechs gedrückt wird (vgl. Fig. 8a und 8b).

Wie in allen Figuren der Zeichnung dargestellt, ist die mit den Deckblechen 1.2, 1.3 stoffschlüssig verbundene Kernschicht 1.4 deutlich dicker als jedes der Deckbleche 1.2, 1.3, so dass eine hohe Gewichtseinsparung bei Verwendung entsprechender Leichtbleche 1, 1', 1" ermöglicht wird. Die Deckbleche 1.2, 1.3 können beispielsweise aus 0,15 mm bis 0,4 mm dünnen Stahlblechen bestehen, während die nichtmetallische Kernschicht 1.4 beispielsweise aus einer 0,3 mm bis 1,0 mm starken Kunststoffschicht, vorzugsweise aus thermoplastischem Kunststoff besteht. Insbesondere kann die Kernschicht 1.4 aus einem bis mindestens 200 °C temperaturstabilen Kunststoff bestehen, beispielsweise aus einem Polyethylen-Polyamid-Compound.

Die Deckbleche 1.2, 1.3 können auch unterschiedliche Dicken und/oder Werkstoffgüten aufweisen.

Zwar erfolgt die Verwendung des erfindungsgemäßen Leichtbleches 1, 1', 1" vorzugsweise im Kraftfahrzeugbau. Denkbar sind insbesondere aufgrund der vereinfachten Anbindungsmöglichkeit des Leichtbleches 1, 1', 1" an andere Bauteile 6 aber auch andere Verwendungsmöglichkeiten, beispielsweise im Schienenfahrzeugbau oder Flugzeugbau. Die erfindungsgemäße Konstruktion erweitert den Anwendungsbereich von Leichtblechen insbesondere im Kraftfahrzeugbau erheblich. Insbesondere können mit der erfindungsgemäßen Konstruktion Verluste der Verspannungskräfte aufgrund von Setz- und Kriechverhalten des Leichtbleches kompensiert werden.

Die Ausführung der vorliegenden Erfindung ist nicht auf die vorstehend beschriebenen und in der Zeichnung dargestellten Ausführungsbeispiele beschränkt. Vielmehr sind zahlreiche Varianten denkbar, die auch bei einer von den dargestellten Ausführungsbeispielen abweichenden Gestaltung von der in den Ansprüchen angegebenen Erfindung Gebrauch machen, gegebenenfalls in bestehenden Werkzeugoperationen eingebunden werden. Insbesondere liegt es im Rahmen der Erfindung, die Merkmale der dargestellten Ausführungsbeispiele miteinander zu kombinieren, wobei auch beliebige Teilkombinationen der Merkmale im Rahmen der Erfindung liegen. Beispielsweise ist es auch möglich, die beschriebene Schrittfolge zur Herstellung eines Durchgangsloches 1.1 des erfindungsgemäßen Leichtbleches 1, 1', 1" zu ändern, indem beispielsweise das kleinere Deckblechloch 1.6 vor dem größeren Deckblechloch 1.5 in das Leichtblech 1, 1', 1" eingebracht bzw. eingeschnitten wird.

## Patentansprüche

1. Leichtblech (1, 1', 1"), insbesondere zur Verwendung im Fahrzeugbau, mit mindestens zwei metallischen Deckblechen (1.2, 1.3) und mindestens einer nichtmetallischen Kernschicht (1.4), welche vorzugsweise aus Kunststoff gebildet ist, und mindestens einem Durchgangsloch (1.1) zur Aufnahme eines Verbindungselements (2), insbesondere einer Schraube oder eines Niets, wobei die Deckbleche (1.2, 1.3) unterschiedlich große, das Durchgangsloch (1.1) definierende Löcher (1.5, 1.6) aufweisen, und wobei die Kernschicht (1.4) ein mit den Löchern (1.5, 1.6) der Deckbleche (1.2, 1.3) fluchtendes Loch (1.7) aufweist, dessen Lochdurchmesser im Wesentlichen dem Durchmesser des größeren Loches (1.5) der unterschiedlich großen Löcher der Deckbleche (1.2, 1.3) entspricht, **dadurch gekennzeichnet, dass entweder** das den kleineren Lochdurchmesser aufweisende Loch (1.6) des einen Deckbleches (1.2) so bemessen ist, dass ein durch Umformen des Lochrandes (1.21) dieses Deckbleches (1.2) in Richtung der Kernschicht (1.4) erzeugter Kragen (1.9) die Kernschicht (1.4) teilweise abdeckt, wobei der Kragen (1.9) mindestens ein Drittel, vorzugsweise mindestens die Hälfte der Dicke (D) der Kernschicht (1.4) abdeckt, **oder** dass die Lochdurchmesser der unterschiedlich großen Löcher (1.5, 1.6) der Deckbleche (1.2, 1.3) derart aufeinander abgestimmt sind, dass eine umlaufende Kante (1.22) eines Kragens (1.9), der durch Umformen des Randes (1.21) des den kleineren Lochdurchmesser aufweisenden Loches (1.6) des einen Deckenbleches (1.2) in Richtung der Kernschicht (1.4) erzeugt wird oder ist, zumindest bereichsweise die umlaufende Kante (1.51) des den größeren Lochdurchmesser aufweisenden Loches (1.5) des anderen Deckenbleches (1.3) berührt.

2. Leichtblech nach Anspruch 1, **dadurch gekennzeichnet, dass** die Dicke des einzelnen Deckbleches (1.3, 1.4) im Bereich von 0,1 mm bis 1,0 mm, vorzugsweise im Bereich von 0,15 mm bis 0,4 mm liegt.

3. Leichtblech nach Anspruch 1 oder 2, **dadurch gekennzeichnet, dass** die Dicke (D) der Kernschicht (1.4) im Bereich von 0,2 mm bis 3,0 mm, vorzugsweise im Bereich von 0,3 mm bis 1,0 mm liegt.

4. Leichtblech nach einem der Ansprüche 1 bis 3, **dadurch gekennzeichnet, dass** die Dicke (D) der Kernschicht (1.4) größer ist als die Dicke des jeweiligen Deckbleches (1.2, 1.3), wobei die Dicke (D) der Kernschicht (1.4) mindestens das 1,1-fache, vorzugsweise mindestens das 2-fache der Dicke des jeweiligen Deckbleches (1.2, 1.3) beträgt.

5. Leichtblech nach einem der Ansprüche 1 bis 4, **dadurch gekennzeichnet, dass** die Deckbleche (1.2, 1.3) unterschiedliche Dicken und/oder Werkstoffgüten aufweisen.

6. Leichtblech nach einem der Ansprüche 1 bis 5, **dadurch gekennzeichnet, dass** die Deckbleche (1.2, 1.3) aus Stahl gefertigt sind.

7. Leichtblech nach einem der Ansprüche 1 bis 6, **dadurch gekennzeichnet, dass** die Kernschicht (1.4) aus einem bis mindestens 200 °C temperaturstabilen Kunststoff, vorzugsweise aus Polyethylen-Polyamid-Compound besteht.

8. Leichtblech nach einem der Ansprüche 1 bis 7, **dadurch gekennzeichnet, dass** das Deckblech (1.2), welches das kleinere Loch (1.6) aufweist, an seiner der Kernschicht (1.4) zugewandten Innenseite eine ringförmige, vorzugsweise kreisringförmige Ausnehmung (1.23) aufweist.

9. Konstruktion umfassend mindestens ein Leichtblech (1, 1', 1") nach einem der Ansprüche 1 bis 8 und mindestens ein weiteres, vorzugsweise metallisches Bauteil (6), das mit dem mindestens einen Leichtblech (1, 1', 1'') über ein in dem Durchgangsloch (1.1) aufgenommenes Verbindungselement (2) kraft- und/oder formschlüssig verbunden ist.

10. Konstruktion nach Anspruch 9, **dadurch gekennzeichnet, dass** Verbindungselement (2) eine Schraube oder ein Niet ist.

## Claims

1. Lightweight plate (1,1',1"), in particular for use in automotive engineering, comprising at least two metallic cover sheets (1.2,1.3) and at least one non-metallic core layer (1.4) that is preferably made of plastics material, and at least one through-hole (1.1) for receiving a connecting element (2), in particular a screw or a rivet, the cover sheets (1.2, 1.3) comprising different-sized holes (1.5,1.6) that define the through-hole (1.1), and the core layer (1.4) comprising a hole (1.7) which is aligned with the holes (1.5, 1.6) in the cover sheets (1.2,1.3) and the diameter of which substantially corresponds to the diameter of the larger hole (1.5) of the different-sized holes in the cover sheet (1.2, 1.3), **characterised in that** the hole (1.6) in one of the cover sheets (1.2) that has the smaller hole diameter has dimensions such that a collar (1.9) produced by deforming the hole edge (1.21) of this cover sheet (1.2) towards the core layer (1.4) covers the core layer (1.4) in part, the collar (1.9) covering at least one third, preferably at least half, of the thickness (D) of the core layer (1.4), or **in that** the hole diameters of the different-sized holes (1.5,1.6) in the cover sheets (1.2, 1.3) are adapted to another such that a circumferential edge (1.22) of a collar (1.9), which is or will be produced by deforming the edge (1.21) of the hole (1.6) in one of the cover sheets (1.2) that has the smaller diameter towards the core layer (1.4), contacts the circumferential edge (1.51) of the hole (1.5) in the other cover sheet (1.3) that has the larger hole diameter, at least in some regions.

2. Lightweight plate according to claim 1, **characterised in that** the thickness of the individual cover sheet (1.3,1.4) is in the range between 0.1 mm and 1.0 mm, preferably in the range between 0.15 mm and 0.4 mm.

3. Lightweight plate according to either claim 1 or claim 2, **characterised in that** the thickness (D) of the core layer (1.4) is in the range between 0.2 mm and 3.0 mm, preferably in the range between 0.3 mm and 1.0 mm.

4. Lightweight plate according to any of claims 1 to 3, **characterised in that** the thickness (D) of the core layer (1.4) is greater than the thickness of each cover sheet (1.2, 1.3), the thickness (D) of the core layer (1.4) being at least 1.1 times, preferably 2 times, the thickness of each cover sheet (1.2, 1.3).

5. Lightweight plate according to any of claims 1 to 4, **characterised in that** the cover sheets (1.2, 1.3) are of different thickness and/or have different material qualities.

6. Lightweight plate according to any of claims 1 to 5, **characterised in that** the cover sheets (1.2, 1.3) are made of steel.

7. Lightweight plate according to any of claims 1 to 6, **characterised in that** the core layer (1.4) is made of plastics material, preferably of a polyethylene-polyamide compound, which withstands heat up to at least 200 °C.

8. Lightweight plate according to any of claims 1 to 7, **characterised in that** the cover sheet (1.2) that has the smaller hole (1.6) comprises a recess (1.23) on the inner face thereof facing the core layer (1.4), which recess is ring-shaped, preferably annular.

9. Structure comprising at least one lightweight plate (1, 1', 1") according to any of claims 1 to 8, and at least one further, preferably metal, component (6) that is frictionally and/or positively connected to the at least one lightweight plate (1, 1', 1") by means of a connecting element (2) received in the through-hole (1.1).

10. Structure according to claim 9, **characterised in that** connecting element (2) is a screw or a rivet.

## Revendications

1. Tôle légère (1, 1', 1"), destinée en particulier à être utilisée pour la construction de véhicules automobiles, laquelle comprend au moins deux tôles de recouvrement (1.2, 1.3) métalliques et au moins une couche centrale (1.4) non métallique, réalisée de préférence en matière synthétique, et au moins un orifice de passage (1.1) pour la réception d'un élément de liaison (2), en particulier d'une vis ou d'un rivet, sachant que les tôles de recouvrement (1.2, 1.3) sont dotées de trous (1.5,1.6) de grandeur différente, qui définissent l'orifice de passage (1.1), et sachant que la couche centrale (1.4) est dotée d'un trou (1.7), qui est en alignement avec les trous (1.5, 1.6) des tôles de recouvrement (1.2, 1.3), et dont le diamètre correspond sensiblement au diamètre du plus grand (1.5) des trous de grandeur différente des tôles de recouvrement (1.2,1.3), **caractérisée en ce que soit** le trou (1.6) de l'une (1.2) des tôle de recouvrement, qui présente le diamètre le plis petit, est dimensionné de telle manière qu'une collerette (1.9), réalisée par déformation du bord (1.21) dudit trou de ladite tôle de recouvrement (1.2) en direction de la couche centrale (1.4), recouvre partiellement ladite couche centrale (1.4), sachant que la collerette (1.9) recouvre au moins un tiers, de préférence au moins la moitié de l'épaisseur (D) de la couche centrale (1.4), ou **soit** que les diamètres des trous (1.5, 1.6) de grandeur différente des tôles de recouvrement (1.2, 1.3) soient adaptés l'un à l'autre de telle manière qu'un bord périphérique (1.22) d'une collerette (1.9), qui est ou a été réalisée par déformation du bord (1.21) du trou (1.6) de l'une des tôles de recouvrement (1.2) doté du plus petit diamètre, en direction de la couche centrale (1.4), contacte, au moins par sections, le bord périphérique (1.51) du trou (1.5), doté du plus grand diamètre, de l'autre tôle de recouvrement (1.3).

2. Tôle légère selon la revendication 1,
**caractérisée en ce que** l'épaisseur de chacune des tôles de recouvrement (1.3, 1.4) est située dans une plage de 0,1 mm à 1,0 mm, de préférence dans une plage de 0,15 mm à 0,4 mm.

3. Tôle légère selon revendication 1 ou 2,
**caractérisée en ce que** l'épaisseur (D) de la couche centrale (1.4) est située dans une plage de 0,2 mm à 3,0 mm, de préférence dans une plage de 0,3 mm à 1,0 mm.

4. Tôle légère selon l'une des revendications 1 à 3,
**caractérisée en ce que** l'épaisseur (D) de la couche centrale (1.4) est supérieure à l'épaisseur de chacune des tôles de recouvrement (1.2,1.3), sachant que l'épaisseur (D) de la couche centrale (1.4) est au moins 1,1 fois, de préférence 2 fois plus grande que l'épaisseur de chacune des tôles de recouvrement (1.2, 1.3).

5. Tôle légère selon l'une des revendications 1 à 4,
**caractérisée en ce que** les tôles de recouvrement (1.2, 1.3) présentent des épaisseurs et / ou des qualités de matériau différentes.

6. Tôle légère selon l'une des revendications 1 à 5,
**caractérisée en ce que** les tôles de recouvrement (1.2,1.3) sont fabriquées en acier.

7. Tôle légère selon l'une des revendications 1 à 6,
**caractérisée en ce que** la couche centrale (1.4) consiste en une matière synthétique, stable jusqu'à une température d'au moins 200 °C, de préférence en un composé de polyéthylène et de polyamide.

8. Tôle légère selon l'une des revendications 1 à 7,
**caractérisée en ce que** la tôle de recouvrement (1.2) dotée du trou (1.6), qui présentant le diamètre le plus petit, est pourvue d'un évidement annulaire, de préférence d'un évidement en forme de anneau de cercle (1.23) sur sa face intérieure, orientée vers la couche centrale (1.4).

9. Construction comprenant au moins une tôle légère (1, 1', 1") selon l'une des revendications 1 à 8 et au moins un autre composant (6), de préférence métallique, qui est relié de manière à être solidaire et / ou par emboîtement, à la tôle légère (1,1', 1") au moins prévue, au moyen d'un élément de liaison (2), qui est introduit dans un trou de passage (1.1).

10. Construction selon la revendication 9,
**caractérisée en ce que** l'élément de liaison (2) est une vis ou un rivet.
